# EUROPÄISCHE PATENTSCHRIFT

(11) **EP 4 079 446 B1**
(45) Veröffentlichungstag und Bekanntmachung des Hinweises auf die Patenterteilung: **11.09.2024**
(21) Anmeldenummer: 21169236.3
(22) Anmeldetag: 19.04.2021
(51) Int. Cl.: B23K 26/352, B23K 26/36, B32B 21/04

(54) **VERFAHREN ZUM HERSTELLEN EINES DEKORPANEELS MIT VERBESSERTER STRUKTURIERUNG**
METHOD FOR PRODUCING A DECORATIVE PANEL WITH IMPROVED STRUCTURE
PROCÉDÉ DE FABRICATION D'UN PANNEAU DÉCORATIF À STRUCTURATION AMÉLIORÉE

(43) Veröffentlichungstag der Anmeldung: 26.10.2022
(73) Patentinhaber: Akzenta Paneele + Profile GmbH, 56759 Kaisersesch (DE)
(72) Erfinder: Hannig, Hans-Jürgen, 51427 Bergisch Gladbach (DE); Hüllenkremer, Felix, 56076 Koblenz (DE); Weyer, Paul, 51063 Köln (DE)
(74) Vertreter: Michalski Hüttermann & Partner Patentanwälte mbB

(56) Entgegenhaltungen:
- DE-B4- 102005 046 264
- US-A- 6 037 967
- US-B1- 6 625 181

## Beschreibung

Die vorliegende Erfindung betrifft ein Verfahren zum Herstellen eines Dekorpaneels. Die vorliegende Erfindung betrifft insbesondere ein Verfahren durch welches mittels Laserstrukturierung auf einfache und anpassbare Weise bei hohem Durchsatz hoch präzise Strukturen in eine Paneelschicht einbringbar sind.

Im Verlaufe der Herstellung eines Dekorpaneels kann es gewünscht sein, eine Schicht des entsprechenden Schichtaufbaus mit einer Strukturierung zu versehen. Dies kann herkömmlicher Weise beispielsweise durch das Einwirken eines Pressblechs realisiert werden, indem dieses insbesondere unter Einwirkung von Temperatur und Druck auf die zu strukturierende Schicht gepresst wird.

Es ist jedoch auch bekannt, Strukturen mittels Laserbehandlung in die zu strukturierende Schicht einzubringen.

DE 10 2005 046 264 A1 beschreibt ein Verfahren zum Herstellen eines Paneels mit einer mindestens abschnittsweise aufgetragenen Oberflächenbeschichtung mit den Schritten
- Auftragen einer unbearbeiteten Porenschicht
- Einbringen von Poren in die Porenschicht mittels Laserbearbeitung.

Dieses Dokument betrifft weiter ein Paneel, dessen Oberfläche mindestens abschnittsweise mit einer Porenschicht versehen ist, in die mittels Laserbearbeitung Poren eingebracht sind.

EP 3 685 979 A1 beschreibt ein Verfahren zur Herstellung von Bodenplatten, umfassend die folgenden Verfahrensschritte:
- Herstellen einer mit einem Relief versehenen Pressplatte,
- Bilden der vorgenannten Bodenplatten, wobei
die Pressplatte zumindest zur Realisierung geprägter Abschnitte in der oberen Oberfläche einer Platte angewendet wird, aus denen anschließend Bodenplatten gebildet werden, wobei das Relief in der Pressplatte mittels einer Laserbehandlung realisiert wird und wobei die Laserbehandlung ein Materialabscheidungsprozess ist.

Der vorbezeichnete Stand der Technik kann jedoch noch weiteres Verbesserungspotential bieten, insbesondere hinsichtlich der Strukturierung eines Dekorpaneels mittels einer Laserbehandlung.

Die Aufgabe der vorliegenden Erfindung besteht somit darin, wenigstens einen Nachteil des Stands der Technik zumindest teilweise zu überwinden. Die Aufgabe der vorliegenden Erfindung besteht insbesondere darin, eine Lösung zu schaffen, mittels der in hoher Auflösung und mit hohem Durchsatz eine Laserstrukturierung im Rahmen der Herstellung eines Dekorpaneels möglich ist.

Gelöst wird diese Aufgabe durch ein Verfahren mit den Merkmalen gemäß Anspruch 1. Bevorzugte Ausgestaltungen der Erfindung sind in den Unteransprüchen oder in der Beschreibung angegeben, wobei weitere in den Unteransprüchen oder in der Beschreibung beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Beschrieben wird ein Verfahren zum Herstellen eines Dekorpaneels, aufweisend die Verfahrensschritte:
a) Aufbringen einer Dekorschicht auf einen Träger,
b) gegebenenfalls Aufbringen einer Zwischenschicht auf die Dekorschicht,
c) Aufbringen einer Deckschicht auf die Dekorschicht oder die Zwischenschicht,
   und
d) Strukturieren wenigstens einer zu strukturierenden Schicht, wobei die zu strukturierende Schicht ausgewählt ist aus der Dekorschicht, der Zwischenschicht und der Deckschicht,
wobei
Verfahrensschritt d) die Verfahrensschritte aufweist:
d1) Erzeugen eines Laserstrahls;
d2) Aufteilen des Laserstrahls in eine Matrix aus einer Mehrzahl von Teilstrahlen;
d3) Leiten der Matrix von Teilstrahlen in einen Modulator zum selektiven Inaktivieren einzelner Teilstrahlen;
d4) Leiten der Matrix an Teilstrahlen von dem Modulator in einen optischen Scanner, wobei die Matrix an Teilstrahlen nach dem Modulator sämtliche in den Modulator geleiteten oder eine hierzu reduzierte Anzahl an Teilstrahlen umfasst; und
d5) Leiten der Matrix an Teilstrahlen von dem Scanner auf die zu strukturierende Schicht; wobei
d6) die zu strukturierende Schicht unter Einwirkung der Teilstrahlen zur Erzeugung einer dreidimensionalen Struktur negativstrukturiert wird.

Ein derartiges Verfahren kann gegenüber den Lösungen aus dem Stand der Technik signifikante Vorteile aufweisen.

Das Verfahren dient dem Herstellen eines Dekorpaneels. Im Sinne der vorliegenden Erfindung sind unter dem Begriff Dekorpaneel insbesondere Wand-, Decken, Tür- oder Bodenpaneele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag, zum Verkleiden von Decken, Wänden oder Türen. Die Dekorpaneele weisen dabei vielfach ein Dekor und eine Oberflächenstrukturierung auf, welche einen Naturwerkstoff imitieren soll. Dabei kann es ferner von Vorteil sein, wenn die haptisch wahrnehmbare Struktur an das Dekor angepasst ist, also eine sogenannte Synchronpore vorliegt.

Das hier beschriebene Verfahren umfasst die folgenden Verfahrensschritte.

Gemäß Verfahrensschritt a) erfolgt das Aufbringen einer Dekorschicht auf einen Träger. Somit kann zunächst ein entsprechender Träger bereitgestellt werden.

Der verwendete Träger ist an sich nicht begrenzt. Grundsätzlich kann es bevorzugt sein, dass der Träger aus einem Kunststoff ausgebildet ist. Besonders bevorzugt kann der Träger einen Werkstoff umfassend einen Kunststoff aufweisen. Kunststoffe, welche bei der Herstellung entsprechender Paneele beziehungsweise der Träger eingesetzt werden können, sind beispielsweise thermoplastische Kunststoffe, wie Polyvinylchlorid, Polyolefine, beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein. Bevorzugt kann der Träger Talkum als Füllmaterial aufweisen, etwa in einer Menge, bezogen auf das Gesamtmaterial des Trägers, von ≥ 30 Gew.-% bis ≤ 70 Gew.-%, insbesondere von ≥ 40 Gew.-% bis ≤ 60 Gew. Darüber hinaus kann es vorgesehen sein, dass der Träger multilaminar aufgebaut ist, also aus einer Vielzahl an Folien.

Es ist jedoch im Sinne der vorliegenden Erfindung nicht ausgeschlossen, dass der Träger holzbasiert ist, beispielsweise aus Holz besteht, also etwa ein HDF- oder MDF-Träger ist. Weiterhin kann der Träger beispielsweise ein sogenannter WPC-Träger sein, ohne den Rahmen der Erfindung zu verlassen.

Auch das Aufbringen der Dekorschicht ist nicht grundsätzlich begrenzt. Insbesondere soll das Dekor jedoch eine Dekorvorlage imitieren. Unter einer "Dekorvorlage" kann somit im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Das Aufbringen des Dekors kann beispielsweise realisiert werden, indem unmittelbar auf den Träger das Dekor aufgebracht wird, beispielsweise durch ein Druckverfahren, insbesondere Digitaldruckverfahren. Dabei kann ferner auf dem Träger ein geeigneter Druckuntergrund vorgesehen sein. Alternativ ist es im Sinne der vorliegenden Erfindung nicht ausgeschlossen, dass das Dekor derart aufgebracht wird, dass beispielsweise eine bereits bedruckte Faserschicht, wie beispielsweise Papierschicht, oder auch eine bereits bedruckte Folie, wie beispielsweise aus Polyethylen, Polypropylen oder Polyvinylchlorid, auf den Träger aufgebracht wird.

Im Sinne der Erfindung sind unter dem Begriff Faserwerkstoffe Materialien wie z.B. Papier und Vliese auf Basis pflanzlicher, tierischer, mineralischer oder auch künstlicher Fasern zu verstehen, ebenso wie Pappen.

Ferner kann die Faserschicht oder die Folie auf dem Träger bedruckt werden und somit etwa als Druckuntergrund dienen.

Weiterhin erfolgt gemäß Verfahrensschritt b) optional das Aufbringen einer insbesondere transparenten Zwischenschicht auf die Dekorschicht. Eine derartige Zwischenschicht kann grundsätzlich ebenfalls wählbar sein. Beispielsweise kann die Zwischenschicht gemeinsam mit der nachfolgenden Deckschicht als Schutzschicht dienen. Eine weitere Möglichkeit besteht darin, dass die Zwischenschicht eine Strukturschicht ist, also insbesondere dem Einbringen der Struktur dienen kann. Als nicht beschränkendes Beispiel kann die Zwischenschicht etwa eine Folie sein, wie beispielsweise eine Kunststofffolie, die beispielsweise aus Polypropylen ausgestaltet ist. Hinsichtlich einer Folie aus Polypropylen hat sich gezeigt, dass diese aufgrund ihrer physikalischen und mechanischen Eigenschaften sehr gut dazu geeignet ist, auch bei hohem Durchsatz laserbasiert strukturiert zu werden. Darüber hinaus ergibt sich der weitere Vorteil, dass bei einem Verdampfen vergleichsweise wenig giftige Dämpfe entstehen, beispielsweise im Vergleich zu PVC.

Grundsätzlich kann die Zwischenschicht beispielsweise aus einem Elastomer, einem thermoplastischen Kunststoff, einem Aminoplast oder einem Lack ausgestaltet sein. Beispiele für thermoplastische Kunststoffe umfassen etwa Polyvinylchlorid (PVC), Polyolefine, wie etwa Polyethylen (PE) oder Polypropylen (PP), Polyethylenterephtalat, Polyester, thermoplastisches Polyurethan (TPU), Styrol oder dessen Derivate (z.B. ASA, ABS). Beispiele für Aminoplaste umfassen etwa Harnstoff- und Melaminformaldehydharze oder Mischungen daraus. Beispiele für Lacke umfassen etwa acrylatbasierte Lacke, etwa acrylatbasierte UV-härtbare Lacke und/oder wässrige Lacksysteme.

Auf die Zwischenschicht oder auf die Dekorschicht wird dann gemäß Verfahrensschritt c) eine insbesondere transparente Deckschicht aufgebracht. Eine derartige Schicht zum Schutz des aufgebrachten Dekors kann insbesondere als Verschleiß- oder Deckschicht oberhalb der Dekorschicht beziehungsweise Zwischenschicht in einem nachfolgenden Verfahrensschritt aufgebracht werden, welche insbesondere die Dekorschicht vor Abnutzung oder Beschädigung durch Schmutz, Feuchtigkeitseinfluss oder mechanische Einwirkungen, wie beispielsweise Abrieb, schützt. Beispielsweise kann es vorgesehen sein, dass die Verschleiß- und/oder Deckschicht als vorproduzierte Overlayschicht, etwa basierend auf Melamin, auf den bedruckten Träger aufgelegt und mit diesem durch Druck- und/oder Wärmeeinwirkung verbunden wird. Ferner kann es bevorzugt sein, dass zur Ausbildung der Verschleiß- und/oder Deckschicht ebenfalls eine strahlungshärtbare Zusammensetzung, wie beispielsweise ein strahlungshärtbarer Lack, wie einem Acryllack, aufgebracht wird. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann die Auftragung beispielsweise mittels Walzen, wie Gummiwalzen oder mittels Gießvorrichtungen aufgetragen werden.

Weiterhin kann die Deckschicht zunächst teilgehärtet werden und im Anschluss eine Endlackierung mit einem Urethanacrylat und eine Endhärtung, etwa mit einem Galliumstrahler, durchgeführt werden.

Ferner kann die Deck- und/oder Verschleißschicht Mittel zur Verringerung der statischen (elektrostatischen) Aufladung des letztendlichen Laminates aufweisen. Beispielsweise kann es dazu vorgesehen sein, dass die Deck- und/oder Verschleißschicht Verbindungen wie z.B. Cholinchlorid aufweist. Das Antistatikmittel kann dabei beispielsweise in einer Konzentration zwischen ≥ 0,1 Gew.-% und ≤ 40,0 Gew.-%, bevorzugt zwischen ≥ 1,0 Gew.-% und ≤ 30,0 Gew.-% in der Deck- und/oder Zusammensetzung zur Ausbildung der Verschleißschicht enthalten sein.

Ebenso kann sich eine transparente Verschleißschicht, etwa aus thermoplastischen Polymeren, anbieten, die als Folie, etwa als Folienbahn, auf die Dekorschicht aufgebracht, beispielsweise kaschiert wird. Gegebenenfalls ist für eine ausreichende Adhäsion der Einsatz eines Haftvermittlers/Primers notwendig, der sich mit der Dekorschicht durch Strahlenhärtung von oben vernetzt ("Klebelack") oder thermisch siegelt ("Hotmelt"). Eine thermoplastische Verschleißschicht bietet weiter Vorteile für den Recyclingprozess des Gesamtaufbaus. Eine Oberflächenstrukturierung kann sehr einfach über beheizte strukturierte Bleche über eine Presse bzw. strukturierte Walzen über einen Kalander eingebracht werden (diese auch synchron zum Dekor).

Weiterhin erfolgt bei dem hier beschriebenen Verfahren gemäß Verfahrensschritt d) das Strukturieren wenigstens einer zu strukturierenden Schicht, wobei die zu strukturierende Schicht ausgewählt ist aus der Dekorschicht, der Zwischenschicht und der Deckschicht. Wie vorstehend bereits ausgeführt dient die Strukturierung insbesondere dazu, an dem Dekorpaneel eine haptisch wahrnehmbare Struktur zu erzeugen und so einen möglichst realistischen Eindruck hinsichtlich der Vorlage zu geben.

Die Strukturierung erfolgt grundsätzlich unter Verwendung eines Lasers und ist somit eine sogenannte Laserstrukturierung. Die Laserstrukturierung wird unter Verwendung der folgenden Verfahrensschritte durchgeführt.

Zunächst erfolgt zum Durchführen der Laserstrukturierung gemäß Verfahrensschritt d1) das Erzeugen eines Laserstrahls. Die Art der Erzeugung des Laserstrahls kann grundsätzlich wählbar sein. Insbesondere erfolgt die Auswahl der Strahlquelle und des erzeugten Laserstrahls beziehungsweise seiner Parameter jedoch in Abhängigkeit des Materials der zu strukturierenden Schicht. Bestenfalls sollte das Material durch den Laserstrahl verdampfen, so dass die spezifischen Parameter entsprechend eingestellt werden sollten.

Weiterhin erfolgt gemäß Verfahrensschritt d2) das Aufteilen des Laserstrahls in eine Matrix aus einer Mehrzahl von Teilstrahlen. Dieser Schritt ermöglicht, dass die zu strukturierende Schicht nicht lediglich durch einen einzelnen Laserstrahl strukturiert wird, sondern dass vielmehr an einer Vielzahl an Positionen gleichzeitig eine Strukturierung erfolgen kann. Dadurch kann der Durchsatz und damit die Effektivität des Verfahrens effektiv gesteigert werden. Dabei können die einzelnen Teilstrahlen jeweils verwendet werden, um von einander getrennte Strukturen zu erzeugen, oder die Laserstrahlen können auch nacheinander oder gleichzeitig jeweils dieselbe Strukturposition bearbeiten. Dabei ist die gleichzeitige Bearbeitung von derselben Strukturposition insbesondere in Verbindung mit mehreren Scannern und entsprechendem Überlapp der Scanfelder möglich.

Diesbezüglich sei darauf hingewiesen, dass bei einer Aufteilung des Laserstrahles sich die Leistungsdaten ebenfalls für jeden Teilstrahl bezogen auf den Initialstrahl reduzieren beziehungsweise, dass ideale Bedingungen vorausgesetzt, die Summe an Teilstrahlen die gleiche Stärke aufweist, wie der initial erzeugte Laserstrahl. Daraus wird ersichtlich, dass bei gewollten tiefen Strukturen gegebenenfalls eine Mehrzahl an Teilstrahlen zur Bearbeitung vorteilhaft sind, wohingegen bei Strukturen mit vergleichsweise geringer Tiefe weniger Teilstrahlen beziehungsweise nur ein Teilstrahl ausreichen kann.

Um die vorgenannten Vorteile besonders effektiv zu erreichen kann es von Vorteil sein, dass Verfahrensschritt d2) erfolgt unter Aufteilung des Laserstrahls in wenigstens 250 Teilstrahlen, beispielsweise in wenigstens 500 Teilstrahlen. Diese Ausgestaltung ermöglicht eine besonders definierte Strukturierung und dabei ferner eine besonders hohe Effektivität. Ferner ist eine derartige Aufteilung unter Verwendung von bekannten Mitteln möglich.

Diesbezüglich ist es ferner bevorzugt, wenn Verfahrensschritt d2), also das Aufteilen des Laserstrahls in eine Matrix aus einer Mehrzahl von Teilstrahlen, erfolgt unter Verwendung eines diffraktiven optischen Elements (DOE). Ein derartiges Element kann in an sich bekannter Weise beispielsweise ein Glaselement sein, welches Mikrostrukturen als insbesondere zweidimensionales optisches Gitter aufweist, die durch ein Beugungsmuster entsprechende Teilstrahlen aus einem Initialstrahl erzeugen. Somit wird das diffraktive optische Element als Strahlteiler eingesetzt. Als weitere Alternative bietet sich für den Verfahrensschritt d2) grundsätzlich ein sogenannter Spatial Light Modulator (SLM) an, wobei die vorliegende Erfindung grundsätzlich nicht auf die genannten Beispiele beschränkt ist.

Beispielsweise über zwei sogenannte Relay-Linsen, oft als sogenanntes 4f-Setup realisiert, werden die Teilstrahlen separiert und in den Modulator wie nachfolgend beschrieben eingekoppelt. Zwischen den Linsen sitzt im Zwischenfokus zunächst eine Maske welche die ungewünschten höheren Beugungsordnungen rausfiltert.

Gemäß dem beschriebenen Verfahren ist es wie vorstehend angedeutet vorgesehen, dass die in Verfahrensschritt d2) erfolgten Teilstrahlen, also die Matrix von Teilstrahlen, anschließend in einen Modulator zum selektiven Inaktivieren einzelner Teilstrahlen geleitet wird. Durch die Verwendung eines derartigen Modulators im Strahlengang der Laserstrahlen wird es somit möglich, dass einzelne Teilstrahlen inaktiviert werden und somit nicht zur zu strukturierenden Schicht gelangen beziehungsweise aus dem Strahlengang entfernt werden. Dadurch kann die Anwendungsbreite des Verfahrens weiter verbessert werden beziehungsweis kann die Qualität und die Anpassung der Struktur an die Vorlage noch weiter verbessert werden. Insbesondere kann es möglich sein, dass in Abhängigkeit der zu erzeugenden Struktur nicht sämtliche Teilstrahlen benötigt werden, so dass auch bei derartigen Strukturen das Verfahren problemlos anwendbar ist.

Besonders bevorzugt kann es ferner sein, als Modulator einen akustooptischen Modulator (AOM) oder einen elektrooptischen Modulator (EOM) zu verwenden. Insbesondere derartige Modulatoren ermöglichen in einer hohen Geschwindigkeit, einzelne Teilstrahlen aus dem zu der zu strukturierenden Oberfläche führenden Strahlenverlauf zu entfernen.

Unter einem Modulator ist dabei ein optisches Bauelement zu verstehen, das einfallendes Licht in Frequenz und Ausbreitungsrichtung oder Intensität beeinflusst, moduliert. Hierzu wird in einem akustooptischen Modulator in einem transparenten Festkörper mit Schallwellen ein optisches Gitter erzeugt. An diesem Gitter wird der jeweilige Lichtstrahl beziehungsweise Teilstrahl gebeugt und gleichzeitig in seiner Frequenz verschoben. Die Ablenkung des Lichts in einem traditionellen akustooptischen Modulator funktioniert nach dem Prinzip der Beugung von Licht an einem optischen Gitter. Entsprechend wird bei einem elektrooptischen Modulator, etwa einem Kristall, die optische Dicke instantan als Funktion der Stärke eines angelegten äußeren elektrischen Feldes geändert und so eine Ablenkung einzelner Teilstrahlen ermöglicht. Es erfolgt somit eine Modulation von Licht auf Basis elektrooptischer Kristalle.

Insbesondere in Verbindung mit einem akustooptischen Modulator oder einem elektrooptischen Modulator wie vorstehend beschrieben kann es ferner bevorzugt sein, dass in Kombination mit dem Modulator eine Strahlfalle verwendet wird. Dadurch wird es möglich, die aus dem Strahlenverlauf entfernten Teilstrahlen sicher zu inaktivieren, so dass diese nicht auf die zu strukturierende Oberfläche fallen, und ferner von diesen für die Umgebung keine negative Beeinflussung oder gar Gefahr ausgeht.

Bei dem beschriebenen Verfahren erfolgt gemäß Verfahrensschritt d4) ferner das Leiten der Matrix an Teilstrahlen von dem Modulator in einen optischen Scanner, wobei die Matrix an Teilstrahlen nach dem Modulator sämtliche in den Modulator geleiteten oder eine hierzu reduzierte Anzahl an Teilstrahlen umfasst. Somit kann die Matrix an Teilstrahlen, die den Modulator verlässt und die somit abgestimmt auf die aufzubringende Struktur ein entsprechendes Muster an Teilstrahlen aufweist, in den optischen Scanner geleitet. Der optische Scanner kann dann die entsprechenden Teilstrahlen auf die gewünschte Position der zu erzeugenden Schicht leiten, so dass eine entsprechende Strukturierung stattfindet. Dabei kann der optische Scanner sämtliche Teilstrahlen gleichzeitig auf die Schicht leiten oder in Abhängigkeit des Scanners können auch verschiedene Teilstrahlen unabhängig von einander auf die zu strukturierende Schicht geleitet werden.

Der optische Scanner dient somit dazu, die Teilstrahlen positionsgenau und in Abhängigkeit der zu erzeugenden Struktur auf die richtige Position der zu strukturierenden Schicht zu richten.

Besonders vorteilhaft kann als optischer Scanner wenigstens einer von einem Polygonscanner und einem Galvanometerscanner verwendet werden. Beispielsweise kann somit ein Polygonscanner oder ein Galvanometerscanner oder auch sowohl ein Galvanometerscanner als auch Polygonscanner verwendet werden, wobei selbstverständlich auch eine Mehrzahl an Galvanometerscannern und/oder Polygonscannern verwendet werden kann.

Derartige Scanner sind insbesondere dazu geeignet, mit einer hohen Dynamik zu arbeiten und dadurch insbesondere, einen hohen Durchsatz zu ermöglichen. Somit kann insbesondere unter Verwendung derartiger Scanner eine industrielle Herstellung von Dekorpaneelen möglich werden, bei der eine effiziente Herstellung kombiniert werden kann mit einer detailgetreuen Strukturierung. Insbesondere dienen die genannten Scanner vorteilhaft dazu, eine auch sehr feingliedrige Struktur aufbringen zu können.

Galvanometrische Scanner eignen sich insbesondere für Anwendungsfälle bei denen große Anteile der Bearbeitungsebene nicht bearbeitet werden und somit Zeitgewinne durch sogenannte "Jumps" zwischen den Bearbeitungsstellen entstehen.

Soll jedoch die gesamte Oberfläche strukturiert werden, bieten sich insbesondere Polygonscanner an. Unter Verwendung von Polygonscannern kann eine zeilenförmige Bearbeitung gewählt werden, wobei Scangeschwindigkeiten > 1 km/s erreicht werden können. In diesem Anwendungsfall scheint daher eine Kombination aus durch Modulatoren schaltbaren Teilstrahlen und einem Polygonscanner als Ablenkeinheit für eine Maximierung der Produktivität besonders vorteilhaft zu sein. Die Teilstrahlen können dabei in einem Array beliebiger Form, beispielsweise quadratisch, rechteckig, zeilenförmig, angeordnet sein.

Entsprechend erfolgt somit gemäß Verfahrensschritt d5) das Leiten der Matrix an Teilstrahlen von dem Scanner auf die zu strukturierende Schicht, gegebenenfalls über eine geeignete Fokussieroptik.

Durch den Einfluss der Teilstrahlen erfolgt nun somit eine Strukturierung, indem gemäß Verfahrensschritt d6) die zu strukturierende Schicht unter Einwirkung der Teilstrahlen beziehungsweise des Teilstrahlenarrays zur Erzeugung einer dreidimensionalen Struktur negativstrukturiert wird. Unter einer Negativstrukturierung ist eine Strukturierung zu verstehen, bei der aus der zu strukturierenden Schicht eine Struktur eingebracht wird durch das selektive Reduzieren der Dicke der entsprechenden Schicht, im vorliegenden Fall also Material in Abhängigkeit der zu erzeugenden Schicht aus der Schicht entfernt, insbesondere verdampft, wird.

Es sei ferner darauf hingewiesen, dass die zuvor beschriebenen Schritte d2) bis d6) bevorzugt in der numerischen Reihenfolge ablaufen, wobei die Erfindung jedoch nicht hierauf beschränkt ist. Darüber hinaus ist möglich, dass weitere Zwischenschritte eingefügt werden, beziehungsweise dass die Strahlen zwischen den genannten Bauteilen noch weitere Bauteile durchlaufen, ohne den Rahmen der Erfindung zu verlassen. Wird somit beschrieben, dass die Strahlung von einem Bauteil zu einem weiteren Bauteil geleitet wird beziehungsweise verläuft, kann dies ein direktes beziehungsweise unmittelbares Leiten ohne weitere zwischenliegende Bauteile als auch ein indirektes Leiten unter Zwischenschaltung weiterer Bauteile umfassen. Gleichermaßen ist es jedoch möglich, dass die Strukturierung erfolgt nur mit den Verfahrensschritten d1) bis d6), die Strukturierung somit aus den Verfahrensschritten d1) bis d6) besteht.

Das hier beschriebene Verfahren weist gegenüber den aus dem Stand der Technik bekannten Verfahren deutliche Vorteile auf.

Insbesondere kann das hier beschriebene Verfahren eine Laserstrukturierung zur Strukturierung eines Dekorpaneels derart anwenden, dass ein hoher Durchsatz und damit ein effizientes Verfahren möglich wird bei gleichzeitig sehr genauer Strukturierung. Somit wird eine besonders hohe Qualität der haptisch wahrnehmbaren Struktur möglich. Dies gilt sowohl für die Haptik als solche, welche einen sehr realistischen Eindruck erweckt, als auch für die Ausgestaltung der Struktur mit Bezug auf eine Vorlage. Denn durch die einzelnen Verfahrensschritte insbesondere der Laserstrukturierung kann die Vorlage bis hin zur Vorlagenidentität nachgeahmt werden, was das Ergebnis der Strukturierung weiter verbessern kann.

Darüber hinaus kann das Verfahren besonders effektiv sein, indem es einen hohen Durchsatz ermöglicht. Denn durch die einzelnen Verfahrensschritte kann bei gleichzeitig hoher Qualität der Strukturierung letztere sehr schnell erfolgen, so dass die Bahngeschwindigkeit der zu strukturierenden Halbzeuge für die Herstellung der Dekorpaneele sehr hoch sein kann. Dies gilt gleichermaßen für einen kontinuierlichen Vorschub, als auch für einen getakteten beziehungsweise sequenziellen Vorschub. Somit kann durch synergetische Effekte der Kombination der einzelnen Verfahrensschritte eine Strukturierung ermöglicht werden, die großtechnisch einsetzbar ist und trotzdem keine Kompromisse hinsichtlich der Qualität und Flexibilität erfordert. Die vorliegende Erfindung betrifft somit insbesondere ein Verfahren durch welches mittels Laserstrukturierung auf einfache und anpassbare Weise bei hohem Durchsatz hoch präzische Strukturen in eine Paneelschicht einbringbar sind.

Ferner wird es möglich, die Strukturen höchst definiert einzubringen, so dass die zu strukturierende Schicht, beispielsweise Lackschicht, sehr dünn gehalten werden kann. Dies kann insbesondere Vorteile aufweisen hinsichtlich der Kosten und hinsichtlich des Gewichts.

Weiterhin kann aber so auch die Recyclingfähigkeit der erzeugten Paneele verbessert werden. Grundsätzlich ist weiterhin eine hohe Flexibilität hinsichtlich der Strukturierung gegeben, was insbesondere in Kombination mit dem Aufbringen des Dekors mittels Digitaldruck signifikante Vorteile bietet.

Hinsichtlich der Laserstrukturierung kann es ferner von Vorteil sein, dass Verfahrensschritt d) ausgeführt wird unter Verwendung eines Lasers, der ausgewählt ist aus einem Ultra-Kurzpuls-Laser, einem CO₂-Laser und einem Excimer Laser. Insbesondere unter Verwendung der vorstehend beschriebenen Laserquellen lässt sich das Verfahren uns insbesondere die beschriebenen Teilschritte der Laserstrukturierung effektiv ausführen, so dass ein überzeugendes Ergebnis der Strukturierung möglich ist.

Wird bei der Laserstrukturierung ein auch als UKP-Laser bezeichneter Ultra-Kurzpuls-Laser verwendet, kann es bevorzugt sein, dass Verfahrensschritt d) derart durchgeführt wird unter Verwendung eines Ultra-Kurz-Puls-Lasers, wobei eine Wellenlänge des erzeugten Laserstrahls in einem Bereich liegt von ≥ 150 nm bis ≤ 1070 nm, wobei der Laser mit einer Leistung arbeitet, die in einem Bereich liegt von ≥ 500 W bis ≤ 100000 W und wobei der Laserstrahl einen Strahldurchmesser aufweist in einem Bereich von ≥ 10 µm bis ≤ 500 µm. Unter Verwendung dieser Parameter kann es bevorzugt erreicht werden, dass das Material der zu strukturierenden Schicht verdampft und somit verlässlich die Negativstrukturierung erfolgen kann. Darüber hinaus kann auch mit einem hohen Kontrast sehr feine Strukturen erzeugt werden, was das Ergebnis der Strukturierung besonders realitätsnah erscheinen lässt.

Dabei sei grundsätzlich und für sämtliche verwendeten Laser darauf hingewiesen, dass die Wellenlänge als auch der Strahldurchmesser gleichermaßen gelten für den erzeugten Initialstrahl als auch für die erzeugten Teilstrahlen. Die Leistung hingegen reduziert sich von der genannten Leistung des Initialstrahls auf die Leistung der Teilstrahlen in Abhängigkeit der Anzahl der erzeugten Teilstrahlen.

Besonders bevorzugt kann bei Verfahrensschritt d) der Laserstrahl gepulst erzeugt werden, wobei eine Pulsfrequenz in einem Bereich von ≤ 100 MHz und eine Pulsdauer in einem Bereich von ≤ 1000 ns, etwa von ≥100 fs bis ≤ 1000 ns verwendet wird. Diese Ausgestaltung ist insbesondere unter Verwendung eines Ultra-Kurzpuls-Lasers möglich. Eine derartige gepulste Anwendung des Laserstrahls ermöglicht insbesondere eine möglichst geringe thermische Belastung der zu strukturierenden Schicht beziehungsweise des Materials der zu strukturierenden Schicht. Somit kann eine besonders hohe Oberflächenqualität der strukturierten Schicht ermöglicht werden.

Ferner kann insbesondere eine Kombination eines Ultra-Kurzpuls-Lasers bei Verfahrensschritt d1) und eines Polygonscanners als optischer Scanner bei Verfahrensschritt d5) Vorteile bieten. Denn für einen Materialabtrag mit einer möglichst geringen Schmelzbildung sowie einer möglichst geringen thermischen Belastung des Werkstücks liegt die benötigte Laserleistung von UKP-Lasern typischerweise in einem Bereich von maximal 50 W. Um die steigende mittlere Laserleistung von UKP-Lasern für eine höhere Produktivität zu nutzen, bieten insbesondere Polygonscanner eine vielversprechende Möglichkeit. Diese erlauben hohe Scangeschwindigkeiten von >1 km/s auf dem Werkstück in Verbindung mit hohen Repetitionsraten. Das Aufteilen des Laserstrahls in ein Array aus Teilstrahlen welches mit einem Galvanometer-Scanner über das Werkstück bewegt wird, kann hier ebenfalls helfen, um die thermische Belastung des Werkstücks auch bei hohen Leistungsdichten zu reduzieren.

Weiter bevorzugt und insbesondere als Alternative zu der Verwendung eines UKP-Lasers kann Verfahrensschritt d) ausgeführt werden unter Verwendung eines CO₂-Lasers, wobei eine Wellenlänge des erzeugten Laserstrahls in einem Bereich liegt von ≥ 9,8 µm bis ≤ 10,6 µm, wobei der Laser mit einer Leistung arbeitet, die in einem Bereich liegt von ≥ 500 W bis ≤ 100000 W, wobei der Laserstrahl einen Strahldurchmesser aufweist in einem Bereich von ≥ 150 µm bis ≤ 1000 µm.

Derartige Laser sind ebenfalls für das hier beschriebene Verfahren vorteilhaft geeignet und sind ferner in großer Anzahl und in vielen Variationen am Markt verfügbar. Dadurch kann insbesondere unter Verwendung von CO₂-Lasern eine gute Anpassbarkeit an die gewünschte spezifische Anwendung beziehungsweise an das gewünschte Ergebnis möglich sein.

Als weitere Alternative kann Verfahrensschritt d) durchgeführt werden unter Verwendung eines Excimer-Lasers, wobei eine Wellenlänge des erzeugten Laserstrahls in einem Bereich liegt von ≥ 100 nm bis ≤ 380 nm, wobei der Laser mit einer Leistung arbeitet, die in einem Bereich liegt von ≥ 1000 W bis ≤ 100000 W, wobei der Laserstrahl einen Strahldurchmesser aufweist in einem Bereich von ≥ 150 µm bis ≤ 1000 µm, etwa bis ≤ 500 µm. Derartige Laser können ebenfalls vorteilhaft gepulst betrieben werden, was die thermische Beanspruchung der zu strukturierenden Schicht sehr gering halten kann.

Weiter bevorzugt weist das Verfahren vor dem Verfahrensschritt d5) den weiteren Verfahrensschritt auf:
d7) Leiten der Laserstrahlen durch ein Scanobjektiv, insbesondere durch ein f-Theta-Objektiv. Die Verwendung eines Scanobjektivs, insbesondere eines f-Theta-Objektives erlaubt es, die Laserstrahlen beziehungsweise den Laserfokus auf ein ebenes Bildfeld, also die ebene Oberfläche der zu strukturierenden Schicht, zu positionieren. Die Fokusgröße kann dabei nahezu konstant bleiben. Somit kann durch die Verwendung eines Scanobjektivs eine besonders definierte Strukturierung erfolgen, wobei ferner besonders feine Strukturen mit hoher Qualität darstellbar sein können.

Beispielsweise kann bei Verfahrensschritt c) eine folienartige Zwischenschicht auf das Dekor aufgebracht werden und die Zwischenschicht in Verfahrensschritt d) strukturiert werden. Die Zwischenschicht, etwa die folienartige Zwischenschicht, kann insbesondere aus einem Kunststoff, wie etwa aus Polypropylen ausgebildet sein.

Grundsätzlich ist es, wie vorstehend bereits angedeutet, an verschiedenen Stellen möglich, in den Strahlengang ein Relay-Linsenpaket etwa mit zwei Linsen vorzusehen. Dadurch können die Teilstrahlen räumlich separiert werden. Dies kann gegebenenfalls Möglichkeiten schaffen, weiteren Bauteile, wie etwa eine Maske, einzubringen. Ferner kann durch das Relay-Linsenpaket ein Einkoppeln in optische Bauteile, wie etwa einen Modulator oder einen Scanner, vorteilhaft ermöglicht beziehungsweise verbessert werden. Beispielsweise kann das Linsenpaket als sogenanntes 4f-Setup realisiert sein, wobei sich 4f sich auf die Anordnung der Module bzw. die Abstände bezieht und f für die Brennweite der Linsen steht.

Die Erfindung wird nachfolgend anhand einer Figur weiter erläutert.

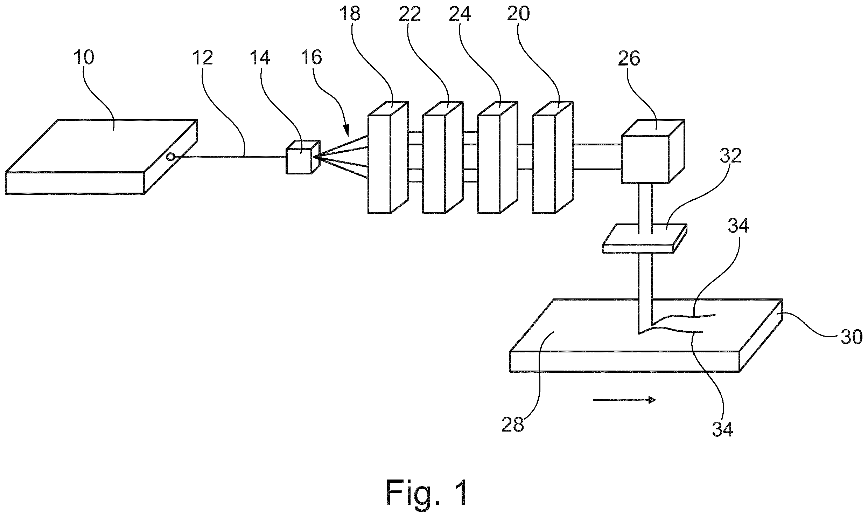

Fig. 1 zeigt schematische eine Durchführung des erfindungsgemäßen Verfahrens.

In der Figur 1 ist schematisch die Durchführung des erfindungsgemäßen Verfahrens gezeigt.

Im Detail zeigt Figur 1 zunächst eine Strahlquelle 10, welche einen Laserstrahl 12 erzeugt. Die Strahlquelle 10 in der Ausgestaltung gemäß Figur 1 ist ein Ultra-Kurzpuls-Laser, wobei die Wellenlänge der erzeugten Laserstrahlung in einem Bereich liegt von ≥ 150 nm bis ≤ 1070 nm. Ferner arbeitet die Strahlquelle 10 mit einer Leistung, die in einem Bereich liegt von ≥ 500 W bis ≤ 100000 W und wobei der Laserstrahl 12 einen Strahldurchmesser aufweist in einem Bereich von ≥ 10 µm bis ≤ 500 µm. Ferner wird der Laserstrahl 12 gepulst erzeugt, wobei eine Pulsfrequenz in einem Bereich von ≤ 100 MHz und eine Pulsdauer in einem Bereich von ≥ 100 fs bis ≤ 1000 ns verwendet wird.

Der erzeugte Laserstrahl 12 trifft nun auf ein diffraktives optisches Element 14, in dem ein Aufteilen des Laserstrahls 12 in eine Matrix 16 aus einer Mehrzahl von Teilstrahlen erfolgt. Beispielsweise kann der Laserstrahl in mehr als 250 Teilstrahlen oder auch weit darüber aufgeteilt werden. Je nach Auslegung des diffraktiven optischen Elements 14 lässt sich so ein eintreffender Laserstrahl 12 in eine gewünschte Anzahl von Hauptbeugungsordnungen und damit Teilstrahlen aufteilen.

Über ein Relay-Linsenpaket etwa mit zwei Linsen 18, 20 oft als sogenanntes 4f-Setup realisiert, können die Teilstrahlen in die Ablenkeinheit eingekoppelt und räumlich separiert werden. Ferner ist zwischen den Linsen 18, 20 im Zwischenfokus eine Maske 22 vorgesehen, welche die ungewünschten höheren Beugungsordnungen rausfiltern kann. Hinter der Maske 22 und vor der zweiten Linse 20 ist ferner ein sogenannter akustooptischer Multi-Channel Modulator (AOMC) als Beispiel eines akustooptischen Modulators (AOM) beziehungsweise eines Modulators 24 vorgesehen. In einem AOM wird beim Schalten durch Schallwellen in einem transparenten Festkörper ein optisches Gitter erzeugen, welches die Teilstrahlen beugt und ablenkt, meist in eine Strahlfalle. Dies dient dem selektiven Inaktivieren einzelner Teilstrahlen.

Dabei ist es grundsätzlich möglich, um die Matrix 16 von Teilstrahlen vollständig durch einen Modulator 24 zu bearbeiten und die Teilstrahlen einzeln modulieren beziehungsweise schalten zu können, eine Mehrzahl an einzelnen AOMs zu verwenden. Im Gegensatz dazu erlauben Multi-Channel AOMs die Modulation von mehreren individuellen Teilstrahlen. Grundsätzlich können somit eine Mehrzahl an Modulatoren 24 oder ein oder mehrere Multichannel-Modulatoren 24 verwendet werden.

In Figur 1 ist nun schematisch gezeigt, dass nach dem Modulator 24 eine reduzierte Anzahl an Teilstrahlen in der Matrix 16 vorliegt und diese nun in einen optischen Scanner 26 als Ablenkeinheit geleitet wird. Durch den Scanner 26 können die Teilstrahlen in einer hohen Geschwindigkeit auf eine zu strukturierende Oberfläche beziehungsweise zu strukturierende Schicht 28 eines Halbzeugs 30 für ein Dekorpaneel geleitet werden. Der optische Scanner 26 ist insbesondere ein Polygonscanner.

Genauer können nach dem Austritt aus dem Scanner 26 die Teilstrahlen durch ein f-Theta-Objektiv 32 auf das Werkstück beziehungsweise die zu strukturierende Schicht 28 fokussiert werden. f-Theta-Objektive werden insbesondere verwendet da sie einerseits den Laserspot bei Auslenkung der Strahlung auf dem Werkstück im Fokus halten und andererseits die, bei spiegelbasierten 2D-Scansystemen auftretenden, Verzerrungen des Scanfeldes teilweise kompensieren und so konstante Scangeschwindigkeiten auf dem Werkstück ermöglichen können.

Grundsätzlich und unabhängig der spezifischen Ausgestaltung sei folgendes erwähnt. Neben Verzerrungen durch das Ablenksystem und die Fokussieroptik kann es bereits durch das diffraktive optische Element 14 zu Verzeichnungen in der Bearbeitungsebene kommen, welche durch einen steigenden Abstand zwischen den Teilstrahlen sowie mit steigender Anzahl der Strahlen in der Matrix 16 zunehmen können. Neben optischen Kompensationsansätzen, wie etwa dem f-Thetha-Objektiv 32, kann diese Problematik umgangen werden, indem eine softwareseitige, scannerbasierte Korrektur der Scanvektoren für jeden einzelnen Teilstrahl erstellt wird. Eine zusätzliche Kompensation der Verzerrung durch etwaige optische Komponenten, wie etwa das f-Thetha-Objektiv 32, kann jedoch trotzdem alternativ oder zusätzlich möglich sein.

Figur 1 zeigt ferner schematisch, dass die zu strukturierende Schicht 28 unter Einwirkung der Matrix 16 an Teilstrahlen zu Erzeugung einer dreidimensionalen Struktur 34 negativstrukturiert wird. Dabei kann die zu strukturierende Schicht 28 eine Folie, etwa ausgestaltet aus Polypropylen, sein, welche auf eine Dekorschicht aufgebracht ist.

Im Anschluss an die gezeigte Strukturierung kann zur Herstellung des fertigen Dekorpaneels gegebenenfalls noch eine Deckschicht auf die strukturierte Schicht aufgebracht werden.

Ferner können umlaufende Verriegelungsmittel eingebracht werden, welche eine Verriegelung des Paneels mit anderen Paneelen, beispielsweise zum Herstellen eines Fußbodenbelags, erlauben können.

Eine beispielhafte Ausgestaltung zur Strukturierung kann wie folgt möglich sein.

Für eine Bearbeitung von Paneelen mit den Maßen 1300 x 1280 mm wäre folgender Aufbau beispielhaft möglich. Es können insgesamt neun Polygonscanner mit einer Scanfeldgröße von 450 mm² × 450 mm², und einer Spotgröße der Teilstrahlen von 50 µm verwendet werden. Ferner kann ein Pulsüberlapp der jeweiligen von den Scannern erzeugten Pulse von 50 % Ferner kann eine Anzahl Abtragsschichten von 160 verwendet werden, so dass bei einer Strukturtiefe von 80 µm 0,5 µm Abtrag je Schicht beziehungsweise je Bearbeitung erfolgt.

Dabei kann eine Bearbeitungszeit pro Paneel bei 2,229 s liegen, etwa bei 35 m/min Plattenvorschub.

Es können ferner 740 schaltbare Teilstrahlen à 45 Watt (Fluenz 0,08 J/cm²) pro Scanner 26 verarbeitet werden, die mittels einem DOE 14 zeilenförmig aufgeteilt und angeordnet werden und schaltbar sind durch entsprechende AOMs. Der Abstand zwischen jedem Teilstrahl auftreffend auf das Paneel kann bei ca. 600 µm liegen.

Bei dieser Ausgestaltung kann eine Bearbeitungsgeschwindigkeit der Polygonscanner bei 717 m/s liegen und kann die benötigte Laserleistung bei 300 kW liegen und die benötigte Repetitionsrate beziehungsweise Frequenz des UKP-Lasers bei 28,68 MHz. Die Pulslänge kann bei < 10 ps bevorzugt < 1 ps liegen.

Bei den genannten Werten, also Plattengröße und Bearbeitungsparameter der Paneele, kann eine Vektorlänge pro Paneel, also der insgesamt durch alle Bearbeitungen hervorgerufene Länge der Laser-Bearbeitungszeilen, berechnet aus Länge der Zeilen pro Platte x Anzahl der bearbeiteten Schichten, von 10649600 m vorliegen.

### Bezugszeichenliste

- 10: Strahlquelle
- 12: Laserstrahl
- 14: diffraktives optisches Element
- 16: Matrix
- 18: Linse
- 20: Linse
- 22: Maske
- 24: Modulator
- 26: Scanner
- 28: Schicht
- 30: Halbzeug
- 32: f-Thetha-Objektiv
- 34: Struktur

## Patentansprüche

1. Verfahren zum Herstellen eines Dekorpaneels, aufweisend die Verfahrensschritte:
a) Aufbringen einer Dekorschicht auf einen Träger,
b) gegebenenfalls Aufbringen einer Zwischenschicht auf die Dekorschicht,
c) Aufbringen einer Deckschicht auf die Dekorschicht oder die Zwischenschicht, und
d) Strukturieren wenigstens einer zu strukturierenden Schicht (28), wobei die zu strukturierende Schicht (28) ausgewählt ist aus der Dekorschicht, der Zwischenschicht und der Deckschicht,
wobei Verfahrensschritt d) den Verfahrensschritt aufweist:
d1) Erzeugen eines Laserstrahls (12);
**dadurch gekennzeichnet, dass** der Verfahrensschritt d) die Verfahrensschritte aufweist:
d2) Aufteilen des Laserstrahls (12) in eine Matrix (16) aus einer Mehrzahl von Teilstrahlen;
d3) Leiten der Matrix (16) von Teilstrahlen in einen Modulator (24) zum selektiven Inaktivieren einzelner Teilstrahlen;
d4) Leiten der Matrix (16) an Teilstrahlen von dem Modulator (24) in einen optischen Scanner (26), wobei die Matrix (16) an Teilstrahlen nach dem Modulator (24) sämtliche in den Modulator (24) geleiteten oder eine hierzu reduzierte Anzahl an Teilstrahlen umfasst; und
d5) Leiten der Matrix (16) an Teilstrahlen von dem Scanner (26) auf die zu strukturierende Schicht (28); wobei
d6) die zu strukturierende Schicht (28) unter Einwirkung der Teilstrahlen zur Erzeugung einer dreidimensionalen Struktur (34) negativstrukturiert wird.

2. Verfahren nach Anspruch 1, **dadurch gekennzeichnet, dass** der Modulator (24) in Kombination mit wenigstens einer Strahlfalle verwendet wird.

3. Verfahren nach Anspruch 1 oder 2, **dadurch gekennzeichnet, dass** als Modulator (24) ein akustooptischer Modulator oder ein elektrooptischer Modulator verwendet wird.

4. Verfahren nach einem der Ansprüche 1 bis 3, **dadurch gekennzeichnet, dass** Verfahrensschritt d2) erfolgt unter Aufteilung des Laserstrahls (12) in wenigstens 250 Teilstrahlen.

5. Verfahren nach einem der Ansprüche 1 bis 4, **dadurch gekennzeichnet, dass** als optischer Scanner (26) wenigstens einer von einem Polygonscanner und einem Galvanometerscanner verwendet wird.

6. Verfahren nach einem der Ansprüche 1 bis 5, **dadurch gekennzeichnet, dass** Verfahrensschritt d) ausgeführt wird unter Verwendung eines Lasers als Strahlquelle (10), der ausgewählt ist aus einem Ultra-Kurzpuls-Laser, einem CO₂-Laser und einem Excimer Laser.

7. Verfahren nach Anspruch 6, **dadurch gekennzeichnet, dass** Verfahrensschritt d) durchgeführt wird unter Verwendung eines Ultra-Kurz-Puls-Lasers, wobei eine Wellenlänge des erzeugten Laserstrahls (12) in einem Bereich liegt von ≥ 150 nm bis ≤ 1070 nm, wobei der Laser mit einer Leistung arbeitet, die in einem Bereich liegt von ≥ 500 W bis ≤ 100000 W und wobei der Laserstrahl (12) einen Strahldurchmesser aufweist in einem Bereich von ≥ 10 µm bis ≤ 500 µm.

8. Verfahren nach Anspruch 6 oder 7, **dadurch gekennzeichnet, dass** bei Verfahrensschritt d) der Laserstrahl (12) gepulst erzeugt wird, wobei eine Pulsfrequenz in einem Bereich von ≤ 100 MHz und eine Pulsdauer in einem Bereich von ≥100 fs bis ≤ 1000 ns verwendet wird.

9. Verfahren nach einem der Ansprüche 6 bis 8, **dadurch gekennzeichnet, dass** bei Verfahrensschritt d1) ein Ultra-Kurzpuls-Laser als Strahlquelle (10) und bei Verfahrensschritt d5) ein Polygonscanner als optischer Scanner (26) verwendet wird.

10. Verfahren nach Anspruch 6, **dadurch gekennzeichnet, dass** Verfahrensschritt d) ausgeführt wird unter Verwendung eines CO₂-Lasers, wobei eine Wellenlänge des erzeugten Laserstrahls (12) in einem Bereich liegt von ≥ 9,8 µm bis ≤ 10,6 µm, wobei der Laser mit einer Leistung arbeitet, die in einem Bereich liegt von ≥ 500 W bis ≤ 100000 W, wobei der Laserstrahl (12) einen Strahldurchmesser aufweist in einem Bereich von ≥ 150 µm bis ≤ 1000 µm.

11. Verfahren nach Anspruch 6, **dadurch gekennzeichnet, dass** Verfahrensschritt d) durchgeführt wird unter Verwendung eines Excimer-Lasers, wobei eine Wellenlänge des erzeugten Laserstrahls (12) in einem Bereich liegt von ≥ 100 nm bis ≤ 380 nm, wobei der Laser mit einer Leistung arbeitet, die in einem Bereich liegt von ≥ 1000 W bis ≤ 100000 W, wobei der Laserstrahl (12) einen Strahldurchmesser aufweist in einem Bereich von ≥ 10 µm bis ≤ 1000 µm.

12. Verfahren nach einem der vorhergehenden Ansprüche, **dadurch gekennzeichnet, dass** das Verfahren vor dem Verfahrensschritt d5) den weiteren Verfahrensschritt aufweist:
d7) Leiten der Matrix (16) an Teilstrahlen durch ein Scanobjektiv, insbesondere durch ein f-Theta-Objektiv (32).

13. Verfahren nach einem der vorhergehenden Ansprüche, **dadurch gekennzeichnet, dass** der Laserstrahl bei Verfahrensschritt d2) durch ein diffraktives optisches Element (14) in eine Mehrzahl von Teilstrahlen geteilt wird.

14. Verfahren nach einem der vorhergehenden Ansprüche, **dadurch gekennzeichnet, dass** bei Verfahrensschritt c) eine folienartige Zwischenschicht auf das Dekor aufgebracht wird und die Zwischenschicht in Verfahrensschritt d) strukturiert wird.

15. Verfahren nach Anspruch 14, **dadurch gekennzeichnet, dass** die Zwischenschicht aus einem thermoplastischen Kunststoff, einen Aminoplast oder einem Lack ausgebildet ist.

## Claims

1. A method for manufacturing a decor panel, comprising the steps of:
a) applying a decor layer to a carrier,
b) where appropriate, applying an intermediate layer to the decor layer,
c) applying a cover layer onto the decor layer or the intermediate layer, and
d) structuring at least one layer (28) to be structured, wherein the layer (28) to be structured is selected from the decor layer, the intermediate layer, and the cover layer,
wherein step d) includes the step of:
d1) generating a laser beam (12);
**characterized in that** step d) includes the steps of:
d2) dividing the laser beam (12) into a matrix (16) of a plurality of sub-beams;
d3) guiding the matrix (16) of sub-beams into a modulator (24) for selectively inactivating individual sub-beams;
d4) guiding the matrix (16) of sub-beams from the modulator (24) into an optical scanner (26), wherein the matrix (16) of sub-beams after the modulator (24) includes all sub-beams guided into the modulator (24) or a reduced number of sub-beams; and
d5) guiding the matrix (16) of sub-beams from the scanner (26) onto the layer (28) to be structured; wherein
d6) the layer (28) to be structured is negatively structured under the influence of the sub-beams to produce a three-dimensional structure (34).

2. The method according to claim 1, **characterized in that** the modulator (24) is used in combination with at least one beam trap.

3. The method according to claim 1 or 2, **characterized in that** an acousto-optical modulator or an electro-optical modulator is used as the modulator (24).

4. The method according to any of claims 1 to 3, **characterized in that** step d2) is performed by dividing the laser beam (12) into at least 250 sub-beams.

5. The method according to any of claims 1 to 4, **characterized in that** at least one of a polygon scanner and a galvanometer scanner is used as the optical scanner (26).

6. The method according to any of claims 1 to 5, **characterized in that** step d) is performed using a laser selected from an ultra-short-pulse laser, a CO₂ laser, and an excimer laser as a beam source (10).

7. The method according to claim 6, **characterized in that** step d) is performed using an ultra-short-pulse laser, wherein a wavelength of the generated laser beam (12) is in a range of ≥ 150 nm to ≤ 1070 nm, wherein the laser operates with a power in a range of ≥ 500 W to ≤ 100000 W, and wherein the laser beam (12) has a beam diameter in a range of ≥ 10 µm to ≤ 500 µm.

8. The method according to claim 6 or 7, **characterized in that** in step d) the laser beam (12) is generated in a pulsed manner, wherein a pulse frequency in a range of ≤ 100 MHz and a pulse duration in a range of ≥ 100 fs to ≤ 1000 ns are used.

9. The method according to any of claims 6 to 8, **characterized in that** an ultra-short-pulse laser is used as the beam source (10) in step d1) and a polygon scanner is used as the optical scanner (26) in step d5).

10. The method according to claim 6, **characterized in that** step d) is performed using a CO₂ laser, wherein a wavelength of the generated laser beam (12) is in a range of ≥ 9.8 µm to ≤ 10.6 µm, wherein the laser operates with a power in a range of ≥ 500 W to ≤ 100000 W, and wherein the laser beam (12) has a beam diameter in a range of ≥ 150 µm to ≤ 1000 µm.

11. The method according to claim 6, **characterized in that** step d) is performed using an excimer laser, wherein a wavelength of the generated laser beam (12) is in a range of ≥ 100 nm to ≤ 380 nm, wherein the laser operates with a power in a range of ≥ 1000 W to ≤ 100000 W, and wherein the laser beam (12) has a beam diameter in a range of ≥ 10 µm to ≤ 1000 µm.

12. The method according to any of the preceding claims, **characterized in that** the method, before step d5), includes an additional step of: d7) guiding the matrix (16) of sub-beams through a scanning objective, in particular through an f-theta objective (32).

13. The method according to any of the preceding claims, **characterized in that** the laser beam in step d2) is divided into a plurality of sub-beams by a diffractive optical element (14).

14. The method according to any of the preceding claims, **characterized in that**, in step c), a film-like intermediate layer is applied to the decor and the intermediate layer is structured in step d).

15. The method according to claim 14, **characterized in that** the intermediate layer is formed from a thermoplastic plastic, an aminoplast, or a lacquer.

## Revendications

1. Procédé de fabrication d'un panneau décoratif, comprenant les étapes suivantes:
a) appliquer une couche de décor sur un support,
b) le cas échéant, appliquer une couche intermédiaire sur la couche de décor,
c) appliquer une couche de recouvrement sur la couche de décor ou la couche intermédiaire, et
d) structurer au moins une couche (28) à structurer, dans laquelle
la couche à structurer (28) est choisie parmi la couche décorative, la couche intermédiaire et la couche de recouvrement,
dans lequel
l'étape d) comprend l'étape suivante:
d1) générer un faisceau laser (12);
**caractérisé en ce que** l'étape d) comprend les étapes suivantes:
d2) diviser le faisceau laser (12) en une matrice (16) d'une pluralité de sous-faisceaux;
d3) diriger la matrice (16) de sous-faisceaux dans un modulateur (24) pour inactiver sélectivement des sous-faisceaux individuels ;
d4) diriger la matrice (16) de sous-faisceaux du modulateur (24) vers un scanner optique (26), dans lequel la matrice (16) de sous-faisceaux après le modulateur (24) comprend tous les sous-faisceaux dirigés dans le modulateur (24) ou un nombre réduit de sous-faisceaux; et
d5) diriger la matrice (16) de sous-faisceaux du scanner (26) sur la couche (28) à structurer; dans lequel
d6) la couche (28) à structurer est structurée négativement sous l'influence des sous-faisceaux pour produire une structure tridimensionnelle (34).

2. Procédé selon la revendication 1, **caractérisé en ce que** le modulateur (24) est utilisé en combinaison avec au moins un piège à faisceau.

3. Procédé selon la revendication 1 ou 2, caractérisé ce qu'en tant que modulateur (24) un modulateur acousto-optique ou un modulateur électro-optique est utilisé.

4. Procédé selon l'une quelconque des revendications 1 à 3, **caractérisé en ce que** l'étape d2) du procédé est réalisée en divisant le faisceau laser (12) en au moins 250 sous-faisceaux.

5. Procédé selon l'une quelconque des revendications 1 à 4, **caractérisé en ce qu'**en tant que scanner optique (26), au moins un scanner polygonal et un scanner galvanométrique est utilisé.

6. Procédé selon l'une quelconque des revendications 1 à 5, **caractérisé en ce que** l'étape (d) est réalisée à l'aide d'un laser comme source de faisceau (10), sélectionné parmi un laser à impulsions ultra-courtes, un laser CO₂ et un laser excimère.

7. Procédé selon la revendication 6, **caractérisé en ce que** l'étape (d) est réalisée à l'aide d'un laser à impulsions ultra-courtes, dans lequel une longueur d'onde du faisceau laser (12) généré est comprise dans une plage de ≥ 150 nm à ≤ 1070 nm, dans lequel le laser fonctionne avec une puissance comprise dans une plage de ≥ 500 W à ≤ 100000 W, et dans lequel le faisceau laser (12) présente un diamètre de faisceau compris entre ≥ 10 µm et ≤ 500 µm.

8. Procédé selon la revendication 6 ou 7, **caractérisé en ce qu'**à l'étape d), le faisceau laser (12) est généré de manière pulsée, dans lequel une fréquence d'impulsion comprise dans une plage de ≤ 100 MHz et une durée d'impulsion comprise dans une plage de ≥ 100 fs à ≤ 1000 ns sont utilisées.

9. Procédé selon l'une quelconque des revendications 6 à 8, **caractérisé en ce qu'**à l'étape dl), un laser à impulsions ultra-courtes est utilisé comme source de faisceau (10) et à l'étape d5) un scanner polygonal est utilisé comme scanner optique (26).

10. Procédé selon la revendication 6, **caractérisé en ce que** l'étape (d) est réalisée à l'aide d'un laser CO₂, dans lequel une longueur d'onde du faisceau laser (12) généré est comprise dans une plage de ≥ 9,8 µm à ≤ 10,6 µm, dans lequel le laser fonctionnant à une puissance comprise dans une plage de ≥ 500 W à ≤ 100000 W, dans lequel le faisceau laser (12) présente un diamètre de faisceau compris entre ≥ 150 µm et < 1000 µm.

11. Procédé selon la revendication 6, **caractérisé en ce que** l'étape (d) est réalisée à l'aide d'un laser excimère, dans lequel une longueur d'onde du faisceau laser (12) généré est comprise dans une plage de ≥ 100 nm à ≤ 380 nm, dans lequel le laser fonctionne à une puissance dans une plage de ≥ 1000 W à ≤ 100000 W, dans lequel le faisceau laser (12) présente un diamètre de faisceau compris entre ≥10 µm et ≤ 1000 µm.

12. Procédé selon l'une quelconque des revendications précédentes, **caractérisé en ce que** le procédé avant l'étape d5) comprend l'étape supplémentaire suivante: (d7) diriger la matrice (16) de sous-faisceaux à travers une lentille de balayage, en particulier à travers une lentille F-Thêta (32).

13. Procédé selon l'une quelconque des revendications précédentes, **caractérisé en ce qu'**à l'étape d2) du procédé, le faisceau laser est divisé en une pluralité de sous-faisceaux par un élément optique diffractif (14).

14. Procédé selon l'une quelconque des revendications précédentes, **caractérisé en ce qu'**à l'étape c), une couche intermédiaire sous forme de film est appliquée sur le décor et la couche intermédiaire est structurée à l'étape d).

15. Procédé selon la revendication 14, **caractérisé en ce que** la couche intermédiaire est constituée d'un plastique thermoplastique, d'un aminoplaste ou d'une laque.
